# EUROPÄISCHE PATENTSCHRIFT

(11) **EP 1 302 448 B1**
(45) Veröffentlichungstag und Bekanntmachung des Hinweises auf die Patenterteilung: **27.12.2006**
(21) Anmeldenummer: 02021838.4
(22) Anmeldetag: 27.09.2002
(51) Int. Cl.: C03B 23/09, C03B 23/207, C03B 23/13, F24J 2/05

(54) **Verfahren zur Herstellung eines Glaskörpers mit Innen- und Aussenrohr**
Process of producing glass articles having an inner and outer tube
Procédé de fabrication d'un corps en verre à tubes interne et externe

(30) Priorität: 16.10.2001 DE 10150452
(43) Veröffentlichungstag der Anmeldung: 16.04.2003
(73) Patentinhaber: Schott AG, 55122 Mainz (DE)
(72) Erfinder: Haas, Gottfried, 95643 Tirschenreuth (DE); Siller, Michael, 95666 Leonberg (DE); Werner, Martin, 95666 Mitterteich (DE); Braadt, Engelbert, 95666 Mitterteich (DE)
(74) Vertreter: Dr. Weitzel & Partner

(56) Entgegenhaltungen:
- US-A- 4 834 066

## Beschreibung

Die vorliegende Erfindung betrifft ein Verfahren zur Herstellung eines Glaskörpers mit mindestens einem einseitig verschlossenen Innenrohr und einem mindestens einseitig verschlossenen Außenrohr, wobei das Innenrohr nicht koaxial mit dem Boden des Außenrohrs verbunden ist und das Innenrohr am Boden eine Öffnung aufweist. Auf DE 298 01 531 U1 wird verwiesen, die einen Glasvakuumröhrenkollektor betrifft.

Nach herkömmlichen Verfahren zur Herstellung eines Glaskörpers mit einem Außenrohr und einem darin befindlichen konzentrisch angeordneten Innenrohr nach dem Sydney Prinzip werden Außen- und Innenrohr mit einem Wickeldorn eingespannt und miteinander zu einem Boden verschmolzen. Hierzu wird beispielsweise auf die US 4,834,066 verwiesen. Sämtliche Arbeitsgänge zum Verschmelzen der Rohre müssen im eingespannten Zustand durchgeführt werden. Da bei größeren Mengen viele Stationen eingerichtet werden müssen, ist die Einhaltung der geforderten Qualität nicht gewährleistet. Es ist schwierig die gleiche einheitliche Qualität bei den Glaskörpern zu erhalten.

Die Aufgabe der vorliegenden Erfindung liegt darin, ein wirtschaftliches und umweltfreundliches Verfahren zur Herstellung eines Glaskörpers mit mindestens einem einseitig verschlossenen Innenrohr und einem mindestens einseitig verschlossenen Außenrohr bereit zu stellen, wobei das innenrohr nicht koaxial mit dem Boden des Außenrohrs verbunden ist und das Innenrohr am Boden eine Öffnung aufweist.

Die Aufgabe der vorliegenden Erfindung wird durch ein Verfahren zur Herstellung eines Glaskörpers mit mindestens einem einseitig verschlossenen Innenrohr und einem mindestens einseitig verschlossenen Außenrohr gelöst, wobei das Innenrohr nicht koaxial mit dem Boden des Außenrohrs verbunden ist und das Innenrohr am Boden eine Öffnung aufweist, in dem das Innenrohr im Außenrohr derart fixiert wird, dass das Außenrohr einen Überstand aufweist, durch den Überstand am Außenrohr ein Boden geformt wird, durch Abnahme des Glases am Innerohr eine Öffnung gebildet wird und das Außenrohr am Ende evakuiert und abgeschmolzen wird.

Das erfindungsgemäße Verfahren ermöglicht die Herstellung eines langzeitvakuumstabilen Glaskörpers, bei dem alle Funktionsschichten durch das Vakuum vor Korrosionseinflüssen geschützt sind. Umwelteinflüsse können nicht auf den Glaskörper einwirken. Die Funktionsschichten benötigen keine weiteren Schutzmaßnahmen.

Eine bevorzugte Ausgestaltung des erfindungsgemäßen Verfahrens bestehet darin, dass das Innenrohr am Außenrohr mit mindestens zwei Abstandshaltern fixiert wird. Dadurch ist kein weiteres halten durch äußerlich einwirkende Vorrichtungen notwendig. Dadurch können die weiteren Verarbeitungsschritte in getrennten Arbeitsgängen durchgeführt werden. Bevorzugt wird zwischen dem Innenrohr und den Abstandshaltern zwecks Fixierens des Innenrohrs ein Wasserglas angebracht.

Eine bevorzugte Ausgestaltung des erfindungsgemäßen Verfahren besteht darin, dass am Außenrohr in der Nähe des Bodens eine Sicke zentrisch geformt wird. Die Sicke ist geeignet zum Fixieren des Glasbehälters in einem Kollektor.

Eine bevorzugte Ausgestaltung des erfindungsgemäßen Verfahrens liegt darin, dass am Innenrohr der Boden mit einem Fingerdorn abgezogen wird. Dazu wird ein Fingerdorn aus einem speziellen Glaskontaktwerkstoff mit bestimmten Eigenschaften verwendet. Bei der Glasabnahme klebt das Glas auf dem Dorn. Der Dorn zieht das weiche Glas ab. Nach Erkalten wird das Glas abgestoßen.

Eine bevorzugte Ausgestaltung des erfindungsgemäßen Verfahrens liegt darin, dass bei mehreren Verschmelzungsprozessen durch das Ende des Außenrohres Luft eingeblasen wird. Dadurch werden die ursprünglichen scharfkantigen Übergänge gerundet und dadurch die Glasspannungen reduziert und die mechanische Stabilität deutlich erhöht.

Eine bevorzugte Ausgestaltung des erfindungsgemäßen Verfahrens liegt darin, dass am Ende des Außenrohrs ein Pumpstutzen gebildet wird, das Außenrohr evakuiert bevorzugt mit Edelgas oder Edelgasgemisch beschickt wird und der Pumpstutzen verschlossen wird. Nach dem erfindungsgemäßen Verfahren kann vorteilhaft der Glaskörper stirnseitig zum evakuieren abgedichtet werden. Durch das stirnseitige Ansaugen wird ein vakuumdichter Verschluss hergestellt.

Eine bevorzugte Ausgestaltung des erfindungsgemäßen Verfahrens liegt darin, dass das Innenrohr vor der Fixierung im Außenrohr von außen beschichtet wird. Durch das erfindungsgemäße Verfahren kann ein beschichtetes Absorber-Rohr für die Herstellung eines Kollektorrohres mit dem Außenrohr verbunden werden.

Eine bevorzugte Ausgestaltung des erfindungsgemäßen Verfahrens liegt darin, dass das Außenrohr vor der Fixierung mit dem Innenrohr von innen teilweise beschichtet wird. Durch das erfindungsgemäße Verfahren kann ein von innen beschichtetes Hüllrohr für die Herstellung eines Kollektorrohres mit dem Innenrohr verbunden werden.

Erfindungsgemäß ist die Verwendung des Glaskörpers zum Erwärmen von gasförmigen, flüssigen und festen Medien vorgesehen. Absorber-Rohr und Hüllrohr sind in der Kombination als Kollektorohr für die solare Erwärmung sehr wirksam.

Erfindungsgemäß ist weiter die Verwendung des Glaskörpers als Kollektorrohr in einem thermischen Solarkollektor vorgesehen. Die so hergestellten Kollektorrohre sind sehr gut für den Einbau in Solarkollektoren geeignet.

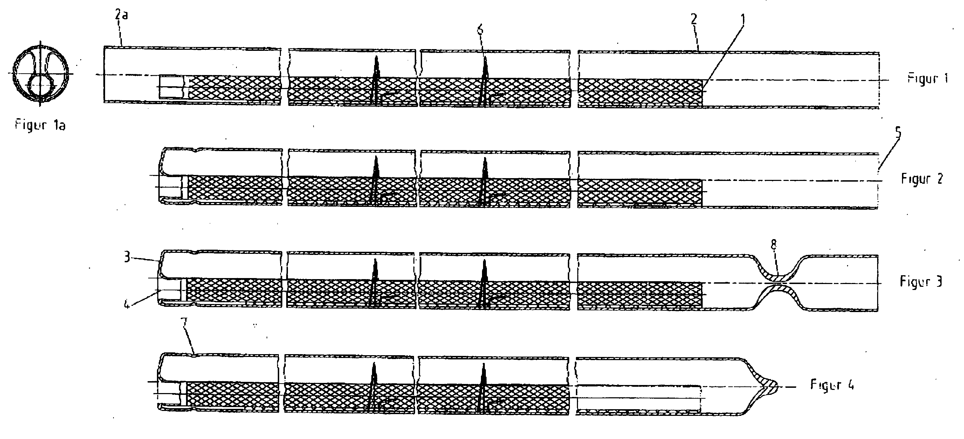

Die Erfindung wird anhand einer Zeichnung näher erläutert. Die Figuren 1, 1a, 2, 3 und 4 stellen Verfahrensschritte des erfindungsgemäßen Verfahrens dar.

Figur 1 ist ein Längsschnitt durch den Glaskörper mit dem Außenrohr (2), in dem das Innenrohr (1) mit zwei Abstandshaltern (6) fixiert ist. Das Innenrohr (1) wird vor der Fixierung im Außenrohr (2) beschichtet. Das Außenrohr (2) wird vor der Fixierung mit dem Innenrohr (1) von innen teilweise beschichtet. Die Abstandshalter (6) sind bevorzugt aus Metall. Die Metallabstandshalter (6) sind so ausgebildet, dass sie an bis zu 90% des Innendurchmessers des Außenrohres (2) anliegen und bis zu 90% des Außendurchmessers des Innenrohres (1) umklammern. Dadurch wird bewirkt, dass der geringere Abstand zwischen dem Außenrohr (1) und dem exzentrisch verlaufenden Innenrohr (2) dauerhaft konstant bleibt. Figur 1a zeigt einen Querschnitt und die Form der Abstandshalter (6). Das Innenrohr (1) ist im Außenrohr (2) derart fixiert, dass das Außenrohr (2) einen Überstand (2a) aufweist.

Figur 1a stellt einen Querschnitt durch den Gegenstand von Figur 1 dar.

Figur 2 zeigt einen Längsschnitt durch den Glaskörper, wobei durch den Überstand (2a) am Außenrohr (2) ein Boden (3) und in der Nähe des Bodens (3) eine Sicke (7) zentrisch geformt wird.

Figur 3 zeigt einen Längsschnitt durch den Glaskörper, wobei durch Abnahme des Glases am Innerohr (1) eine Öffnung (4) gebildet wird, in dem am Innenrohr (1) der Boden (3) mit einem Fingerdorn abgezogen wird. Am Ende (5) des Außenrohrs (2) wird ein Pumpstutzen (8) gebildet. Über den Stutzen kann das Außenrohr (2) evakuiert und mit Edelgas oder Edelgasgemisch beschickt werden.

Figur 4 zeigt einen Längsschnitt durch den fertigen Glaskörper, wobei der Pumpstutzen (8) verschlossen ist.

## Patentansprüche

1. Verfahren zur Herstellung eines vakuumdichten Glaskörpers mit mindestens einem einseitig verschlossenen Innenrohr (1) und einem mindestens einseitig verschlossenen Außenrohr (2), wobei das Innenrohr (1) nicht koaxial mit dem Boden (3) des Außenrohrs (2) verbunden ist und das Innenrohr (1) am Boden (3) eine Öffnung (4) aufweist, wobei
a) das Innenrohr eine erstes Ende und ein zweites Ende umfasst, wobei das zweite Ende geschlossen ist,
b) das Innenrohr (1) im Außenrohr (2) derart fixiert wird, dass das Außenrohr (2) am ersten Ende des Innenrohrs einen Überstand aufweist, wobei das Innenrohr (1) im Außenrohr (2) nicht koaxial angeordnet ist,
c) durch den Überstand am Außenrohr (2) ein Boden (3) geformt wird,
d) zwischen dem ersten Ende des Innenrohrs und dem Boden (3) des Außenrohrs (2) wird eine vakuumdichte Verbindung hergestellt, wobei durch Abnahme des Glases am Innenrohr (1) eine Öffnung (4) zu dessen Innenbereich gebildet wird,
e) das Außenrohr (2)an dem Boden (3) gegenüberliegenden Ende (5) evakuiert und abgeschmolzen wird.

2. Verfahren nach Anspruch 1, wobei das Innenrohr (1) am Außenrohr (2) mit mindestens zwei Abstandshaltern (6) fixiert wird.

3. Verfahren nach Anspruch 2, wobei zwischen dem Innenrohr (1) und den Abstandshaltern (6) zwecks Fixierens des Innenrohres (1) ein Wasserglas angebracht wird.

4. Verfahren nach mindestens einem der Ansprüche 1 bis 3, wobei am Außenrohr (2) bevorzugt in der Nähe des Bodens (3) mindestens eine Sicke (7) bevorzugt zentrisch geformt wird.

5. Verfahren nach mindestens einem der Ansprüche 1 bis 4, wobei am Innenrohr (1) der Boden (3) mit einem Fingerdorn abgezogen wird.

6. Verfahren nach mindestens einem der Ansprüche 1 bis 5, wobei durch das Ende (5) des Außenrohres (2) Luft eingeblasen wird.

7. Verfahren nach mindestens einem der Ansprüche 1 bis 6, wobei am Ende (5) des Außenrohrs (2) bevorzugt ein Pumpstutzen (8) gebildet wird, das Außenrohr (2) bevorzugt evakuiert wird und der Pumpstutzen (8) verschlossen wird.

8. Verfahren nach mindestens einem der Ansprüche 1 bis 7, wobei das Außenrohr (2) evakuiert und mit Edelgas oder Edelgasgemisch beschickt wird.

9. Verfahren nach mindestens einem der Ansprüche 1 bis 8, wobei das Innenrohr (1) vor der Fixierung im Außenrohr (2) von außen beschichtet wird.

10. Verfahren nach mindestens einem der Ansprüche 1 bis 9, wobei das Außenrohr (2) vor der Fixierung mit dem Innenrohr (1) von innen teilweise beschichtet wird.

## Claims

1. A method for producing a vacuum-tight glass body with at least one inside tube (1) which is sealed on at least one side and an outside tube (2) which is sealed on at least one side, with the inside tube (1) being joined to the floor (3) of the outside tube in a non-coaxial manner and the inside (1) having an opening (4) on the floor (3),
a) with the inside tube comprising a first end and a second end, with the second end being sealed;
b) with the inside tube (1) being fixed in the outside tube (2) in such a way that the outside tube (2) has an excess portion on the first end of the inside tube, with the inside tube (1) being arranged in the outside tube (2) in a non-coaxial manner;
c) with a floor (3) being formed by the excess portion on the outside tube (2);
d) with a vacuum-tight connection being produced between the first end of the inside tube and the floor (3) of the outside tube (2), with an opening (4) being formed in the inside region of the inside tube by reducing the glass on the inside tube (1);
e) with the outside tube (2) being evacuated and molten off at the end opposite of the floor (3).

2. A method according to claim 1, wherein the inside tube (1) is fixed to the outside tube (2) with at least two spacers (6).

3. A method according to claim 2, wherein a water glass is attached between the inside tube (1) and the spacers (6) for the purpose of fixing the inside tube (1).

4. A method according to at least one of the claims 1 to 3, wherein at least one bead (7) is formed in a preferably centric manner on the outside tube (2), preferably close to the floor (3).

5. A method according to at least one of the claims 1 to 4, wherein the floor (3) on the inside tube (1) is drawn off by a finger mandrel.

6. A method according to at least one of the claims 1 to 5, wherein air is injected through the end (5) of the outside tube (2).

7. A method according to at least one of the claims 1 to 6, wherein a pumping nozzle (8) is preferably formed at the end (5) of the outside tube (2), the outside tube (2) is preferably evacuated and the pumping nozzle (8) is sealed.

8. A method according to at least one of the claims 1 to 7, wherein the outside tube (2) is evacuated and is charged with inert gas or an inert gas mixture.

9. A method according to at least one of the claims 1 to 8, wherein the inside tube (1) is coated from the outside prior to fixing in the outside tube (2).

10. A method according to at least one of the claims 1 to 9, wherein the outside tube (2) is partly coated from the inside prior to fixing with the inside tube (1).

## Revendications

1. Procédé de réalisation d'un corps en verre étanche au vide avec au moins un tube intérieur (1) fermé d'un côté et un tube extérieur (2) fermé au moins d'un côté, le tube intérieur (1) n'étant pas relié coaxialement avec le fond (3) du tube extérieur (2) et le tube intérieur (1) comportant au fond (3) une ouverture (4),
a) le tube intérieur comprenant une première extrémité et une deuxième extrémité, la deuxième extrémité étant fermée,
b) on fixe le tube intérieur (1) dans le tube extérieur (2) de manière à ce que le tube extérieur (2) soit en débord de la première extrémité du tube intérieur, le tube intérieur (1) n'étant pas disposé coaxialement dans le tube extérieur (2),
c) un fond (3) étant formé par le débord sur le tube extérieur (2),
d) on réalise une liaison étanche au vide entre la première extrémité du tube intérieur et le fond (3) du tube extérieur (2), une ouverture (4) vers le volume interne du tube intérieur (1) étant formée en retirant le verre de ce dernier,
e) on procède à l'évacuation du tube extérieur (2) à l'extrémité (5) opposée au fond (3) et on enlève par fusion cette extrémité.

2. Procédé selon la revendication 1, où on fixe le tube intérieur (1) au tube extérieur (2) moyennant au moins deux pièces d'écartement (6).

3. Procédé selon la revendication 2, où on interpose entre le tube intérieur (1) et les pièces d'écartement (6) un verre soluble pour fixer le tube intérieur (1).

4. Procédé selon une au moins des revendications 1 à 3, où on forme sur le tube extérieur (2), de préférence à proximité du fond (3), au moins une nervure (7), de préférence centrale.

5. Procédé selon une au moins des revendications 1 à 4, où on retire le fond (3) du tube intérieur (1) avec une tige.

6. Procédé selon une au moins des revendications 1 à 5, où on injecte de l'air par l'extrémité (5) du tube extérieur (2).

7. Procédé selon une au moins des revendications 1 à 6, où on forme de préférence un embout d'aspiration (8) à l'extrémité (5) du tube extérieur (2), on évacue de préférence le tube extérieur (2) et on ferme l'embout d'aspiration (8).

8. Procédé selon une au moins des revendications 1 à 7, où on évacue le tube extérieur (2) et on le remplit de gaz rare ou d'un mélange de gaz rares.

9. Procédé selon une au moins des revendications 1 à 8, où on recouvre l'extérieur du tube intérieur (1) d'un revêtement avant de le fixer dans le tube extérieur (2).

10. Procédé selon une au moins des revendications 1 à 9, où on recouvre en partie l'intérieur du tube extérieur (2) avant de procéder à la fixation du tube intérieur (1) sur celui-ci.
